(19) Europäisches Patentamt
European Patent Office
Office européen des brevets

(11) Veröffentlichungsnummer: **0 155 507 B1**

# (12) EUROPÄISCHE PATENTSCHRIFT

(45) Veröffentlichungstag der Patentschrift: **08.11.89**

(51) Int. Cl.⁴: **C 09 B 31/02**, C 09 K 19/60

(21) Anmeldenummer: **85101668.3**

(22) Anmeldetag: **15.02.85**

(54) **Azofarbstoffe und flüssigkristalline Materialien enthaltend diese Farbstoffe.**

(30) Priorität: **21.02.84 DE 3406209**

(43) Veröffentlichungstag der Anmeldung:
**25.09.85 Patentblatt 85/39**

(45) Bekanntmachung des Hinweises auf die Patenterteilung:
**08.11.89 Patentblatt 89/45**

(84) Benannte Vertragsstaaten:
**CH DE FR GB IT LI**

(56) Entgegenhaltungen:
**EP-A- 0 084 208**
**EP-A- 0 134 471**
**CH-A- 487 981**
**DE-A- 3 324 420**

**CHEMICAL ABSTRACTS, Band 106, Nr. 8, Februar 1987, Seite 74, Zusammenfassung Nr. 51685s, Columbus, Ohio, US; & JP-A-61 98 768**

(73) Patentinhaber: **BASF Aktiengesellschaft, Carl-Bosch-Strasse 38, D-6700 Ludwigshafen (DE)**

(72) Erfinder: **Etzbach, Karl-Heinz, Dr., Bensheimer Ring 9 A, D-6710 Frankenthal (DE)**
Erfinder: **Vamvakaris, Christos, Dr., Riedweg 6, D-6701 Kallstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 155 507 B1

## Beschreibung

Die Erfindung betrifft Verbindungen der allgemeinen Formel I

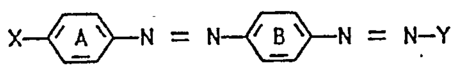 I

in der X einen Rest der Formel

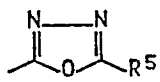, 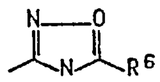, 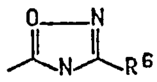, 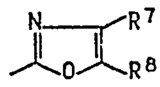, 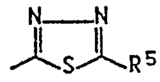,

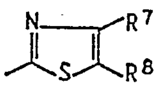, 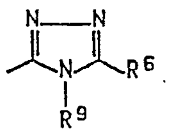 oder 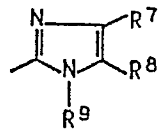,

bedeutet,
wobei

$R^5$ gegebenenfalls substituiertes Alkyl, Cycloalkyl oder Aryl, gegebenenfalls substituiertes Alkyl- oder Cycloalkyl-mercapto,

$R^6$ gegebenenfalls substituiertes Alkyl, Cycloalkyl oder Aryl,

$R^7$ gegebenenfalls substituiertes Alkyl, Cycloalkyl oder Phenyl oder Carbonester,

$R^8$ gegebenenfalls substituiertes Alkyl, Cycloalkyl oder Phenyl oder Carbonester,

$R^7$ und $R^8$ zusammen einen gegebenenfalls substituierten ankondensierten Benzring und

$R^9$ Wasserstoff, gegebenenfalls substituiertes Alkyl, Cycloalkyl oder Phenyl sind, und

Y ein Rest der Formel

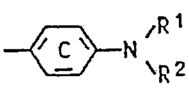, 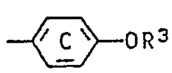, 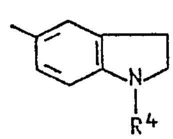, 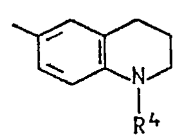, 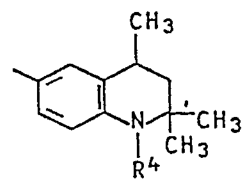

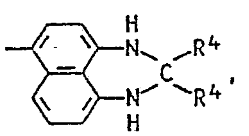, 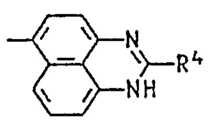, 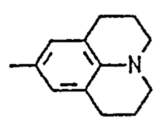 oder 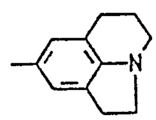

ist, wobei die Ringe A, B und C noch substituiert und durch einen Benzring anelliert sein können und wobei

$R^1$ und $R^2$ Wasserstoff oder gegebenenfalls substituiertes Alkyl, Aralkyl, Allyl oder Cycloalkyl oder zusammen mit dem Stickstoff Piperidino, Pyrrolidino oder Morpholino,

$R^3$ Wasserstoff oder gegebenenfalls substituiertes Alkyl, Cycloalkyl, Aralkyl, Acyl, Alkoxy- oder Aroxycarbonyl oder Arylsulfonyl und

$R^4$ Wasserstoff, Alkyl oder Cycloalkyl sind.

Der Ring A kann beispielsweise noch durch Chlor, Brom, Cyan, Methyl, Ethyl, Methoxy, Ethoxy oder Hydroxy substituiert sein.

Für den Ring B kommen als Substituenten z.B. Chlor, Brom, Methyl, Ethyl, Methoxy, Ethoxy, Acetylamino, Propionylamino oder ein anellierter Benzring in Betracht.

Der Ring C kann als Substituenten z.B. Chlor, Brom, Methyl, Ethyl, Methoxy, Ethoxy, Acetylamino, Propionylamino oder einen anellierten Benzring tragen.

Reste $R^1$ und $R^2$ sind neben Wasserstoff z.B.: Methyl, Ethyl, Butyl, Hexyl, Heptyl, Octyl, Dodecyl, Cyclohexyl, 2-Phenylethyl, 2-Cyanethyl, 2-Oxethyl, 2-Acetoxethyl, 2-Butyryloxethyl, Allyl, Phenylmethyl, 4-Butyl-phenyl-methyl, 4-Cyclohexyl-phenylmethyl, 4-(4'-Butylcyclohexyl)-phenylmethyl.

Reste $R^3$ sind z.B.: gegebenenfalls durch Sauerstoff unterbrochenes $C_1$- bis $C_{12}$-Alkyl, $C_5$- bis $C_7$-Cycloalkyl, Phenylmethyl, 2-Phenylethyl, 4-($C_1$- bis $C_{12}$-Alkyl)-phenylmethyl, 4-Cyclohexyl-phenylmethyl, 4-(4'-$C_1$- bis $C_7$-Alkylcyclohexyl)-phenylmethyl, 4'($C_1$- bis $C_{12}$-Alkoxy)-phenylmethyl, 4-Phenoxyphenylmethyl, 4-Phenylmethyloxy-phenylmethyl, 4($C_1$- bis $C_{12}$-Alkanoyloxy)-phenylmethyl oder Benzoyloxyphenylmethyl.

Einzelne Reste $R^3$ sind neben den bereits genannten z.B.: Ethyl, Propyl, Butyl, Octyl, 2-Ethyl-hexyl, iso-Nonyl, Dodecyl, 2-Butoxy-ethyl, Cyclohexyl, 4-Butylphenylmethyl, 4-(4'-Ethylcyclohexyl)-phenylmethyl, 4-(4'-Propylcyclohexyl)-phenylmethyl, 4-(4'-Butylcyclohexyl)-phenylmethyl, 4-(4'-Pentylcyclohexyl)-phenylmethyl, 4-(4'-Heptylcyclohexyl)-phenylmethyl, 4-Butyloxy-phenylmethyl, 4-iso-Nonyloxy-phenylmethyl, 4-Butyryloxy-phenylmethyl oder 4-Capronyloxy-phenylmethyl.

Reste $R^4$ sind neben Wasserstoff z.B.: Methyl, Ethyl, Butyl oder Cyclohexyl.

Reste $R^5$ sind beispielsweise $C_1$- bis $C_{12}$-Alkyl, durch Hydroxy, $C_1$- bis $C_{12}$-Alkoxy, Phenyl oder Phenoxy substituiertes $C_2$- oder $C_3$-Alkyl, Phenylmethyl, $C_5$- bis $C_7$-Cycloalkyl, gegebenenfalls durch $C_1$- bis $C_{12}$-Alkyl, Phenylmethyl, Phenylethyl, $C_1$- bis $C_{12}$-Alkoxy, Phenoxy, Phenylmethyloxy, $C_1$- bis $C_{12}$-Alkanoyloxy, Benzoyloxy, Phenyl, Diphenyl, Cyclohexyl, 4-($C_1$- bis $C_7$-Alkylcyclohexyl), Carbonester oder Chlor substituiertes Phenyl, $C_1$- bis $C_{12}$-Alkylthio, $C_5$- bis $C_7$-Cycloalkylthio, durch $C_1$- bis $C_{12}$-Alkyl, Phenylmethyl, Phenylethyl, $C_1$- bis $C_{12}$-Alkoxy, Phenoxy, Phenylmethyloxy, $C_1$- bis $C_{12}$-Alkanoyloxy, Benzoyloxy, Phenyl, Diphenyl, Cyclohexyl, 4-($C_1$- bis $C_7$-Alkylcyclohexyl), Carbonester oder Chlor substituiertes Phenylmethylthio oder gegebenenfalls substituiertes 2-Phenylethylthio.

Einzelne Reste $R^5$ sind z.B.: Methyl, Ethyl, iso-Propyl, Butyl, iso-Butyl, Pentyl, 3-Heptyl, Octyl, Nonyl, Dodecyl, 2-Hydroxyethyl, 2-Methoxyethyl, 2-Butoxyethyl, 2-Phenylethyl, 3-Butoxypropyl, Cyclopentyl, Phenyl, 4-Methylphenyl, 4-Butylphenyl, 4-Octylphenyl, 4-Nonylphenyl, 4-Butoxyphenyl, 4-iso-Nonyloxyphenyl, 4-Butyryloxyphenyl, 4-Benzoyloxyphenyl, 4-Phenylphenyl, 4-Cyclohexylphenyl, 4-(4'-Ethyl-cyclohexyl)-phenyl, 4-(4'-Propylcyclohexyl)-phenyl, 4-(4'-Butylcyclohexyl)-phenyl, 4-(4'-Pentylcyclohexyl)-phenyl, 4-Chlorphenyl, Methylthio, Ethylthio, Butylthio, Octylthio, 2-Ethyl-hexylthio, iso-Nonylthio, Cyclohexylthio, 4-Methylphenylmethylthio, 4-Butylphenylmethylthio, 4-Butoxy-phenylmethylthio, 4-Hexoxy-phenylmethylthio, 4-Dodecyloxy-phenylmethylthio, 4-Phenoxy-phenylmethylthio, 4-Phenylmethoxy-phenylmethylthio, 4-Acetoxy-phenylmethylthio, 4-Butyryloxyphenylmethylthio, 4-Capronyloxy-phenylmethylthio, 4-Benzoyloxy-phenylmethylthio, 4-Phenyl-phenylmethylthio, 4-Cyclohexyl-phenylmethylthio, 4-(4-Ethylcyclohexyl)-phenylmethylthio, 4-(4'-Propylcyclohexyl)-phenylmethylthio, 4-(4'-Butylcyclohexyl)-phenylmethylthio, 4-(4'-Pentylcyclohexyl)-phenylmethylthio oder 2-Phenylethylthio.

Für $R^6$ sind im Rahmen der allgemeinen Definition die gleichen Reste wie für $R^5$ zu nennen.

Reste $R^7$ bzw. $R^8$ sind beispielsweise $C_1$- bis $C_4$-Alkyl, gegebenenfalls durch $C_1$- bis $C_4$-Alkyl, Chlor oder Brom substituiertes Phenyl, $C_5$- bis $C_7$-Cycloalkyl oder $C_1$- bis $C_8$-Alkoxycarbonyl.

Einzelne Reste $R^7$ bzw. $R^8$ sind z.B. (gleich oder verschieden): Methyl, Ethyl, Phenyl, p-Chlorphenyl, Ethoxycarbonyl, Butoxycarbonyl oder Cyclohexyl.

Ankondensierte Benzringe (für $R^7$ und $R^8$ zusammen) können beispielsweise durch Methyl, Ethyl, Methoxy, Ethoxy, Butoxy oder Chlor substituiert sein.

Für $R^9$ sind z.B. neben Wasserstoff Methyl, Ethyl, Butyl, Phenyl, 4-Ethylphenyl oder 4-Butylphenyl zu nennen.

Bevorzugt werden Verbindungen der Formel I, bei denen X ein symmetrischer (1,3,4) Oxdiazolyl- oder Thiadiazolylrest ist.

Bevorzugte Substituenten $R^5$ für diese Reste sind z.B.: Propyl, Butyl, Hexyl, 3-Heptyl, Octyl, Nonyl, Dodecyl, 4-Butylphenyl, 4-Cyclohexylphenyl, 4-(4'-$C_2$- bis $C_7$-Alkylcyclohexyl)-phenyl, Butylthio, Hexylthio, Octylthio, 2-Ethyl-hexylthio, iso-Nonylthio, Dodecylthio, Phenylmethylthio, 4-Butylphenylmethylthio, 4-Cyclohexyl-phenylmethylthio, 4-(4'-$C_2$- bis $C_7$-Alkylcyclohexyl)-phenylmethylthio, 4-($C_4$- bis $C_{12}$-Alkoxy)-phenylmethylthio oder 4-Phenylmethoxy-phenylmethylthio zu nennen.

Die Verbindungen der Formel I eignen sich insbesondere als pleochroitische Farbstoffe in elektrooptischen Flüssigkristallanzeigen vom Guest-Host-Typ und zur Herstellung farbiger Polarisationsfolien.

Flüssigkristalline Materialien, welche pleochroitische Farbstoffe enthalten, finden Verwendung in Displays. Die Grundlagen der erfindungsgemäßen Verwendung sind bekannt und z.B. in H. Kelker u. R. Hatz, Handbook of Liquid Crystals, S. 611 ff (1980), R. J. Cox, Mol. Cryst. Liq. Cryst. Vol. 55, S. 51 ff (1979), L. Pauls u. G. Schwarz, Elektronik 14, S. 66 ff (1982) beschrieben. Weitere Literatur, welche die erfindungsgemäße Verwendung detailliert beschreibt, finden sich in den genannten Veröffentlichungen.

Farbstoffe für Flüssigkristallmischungen müssen mehrere Anforderungen erfüllen. Siehe z.B. J. Constant et. al., J. Phys. D: Appl. Phys. Vol 11, S. 479 ff (1978), F. Jones u. T.J. Reeve, Mol. Cryst. Liq. Cryst. Vol. 60, S. 99 ff (1980), EP 43904, EP 55838, EP 65869. Sie dürfen im elektrischen Feld nicht ionisieren, müssen einen möglichst hohen molaren Extinktionskoeffizienten und eine gute Löslichkeit in der verwendeten Flüssigkristallmatrix besitzen, müssen chemisch und insbesondere photochemisch stabil sein und zur Erzielung eines guten Kontrastes des «Guest-Host»-Displays einen Ordnungsgrad S möglichst größer 0,75 in der jeweiligen nematischen Phase aufweisen.

Farbstoffe, die diesen Anforderungen gerecht werden, finden sich überwiegend in der Klasse der Anthrachinone. Siehe z.B. EP 56492, EP 44893, EP 59036, EP 54217.

Azofarbstoffe haben bisher vor allem den Nachteil, daß entweder die Löslichkeit oder die Lichtstabilität ungenügend sind.

Überraschenderweise haben die erfindungsgemäßen Farbstoffe bei gutem Ordnungsgrad auch hohe Löslichkeiten und gute Lichtstabilitäten in der jeweiligen Flüssigkristallmatrix.

Die Verwendung dichroitischer Farbstoffe zur Herstellung von Polarisationsfolien wird z.B. von R. Mizoguchi, et. al. in Displays, Vol. 4, S. 201 ff (1983) beschrieben, dort findet sich auch noch weitere Literatur.

Zur Herstellung der Verbindungen der Formel I kann man Verbindungen der Formel II

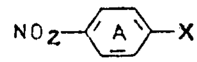

zu Verbindungen der Formel III

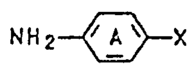

reduzieren, diese z.B. mit Nitrosylschwefelsäure in Eisessig diazotieren und dann mit Kupplungskomponenten der Formel

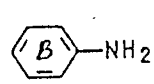

oder

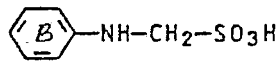

zu Verbindungen der Formel IV umsetzen:

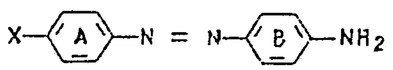 IV.

Durch Diazotierung der Verbindungen der Formel IV und anschliessende Kupplung mit Verbindungen der Formel HY ($R^3=H$) erhält man die Verbindungen der Formel I, in die dann noch für $R^3=H$ der Rest $R^3$ nach bekannter Methoden eingeführt wird.

Die Herstellung der Verbindungen der Formel II erfolgt nach bekannten Methoden (siehe z.B. J.H. Boyer in Heterocyclic Compounds (R.C. Elderfield), Volume 7, S. 508 ff und S. 525 ff, John Wiley a. Sons Inc., New York 1961, W.R. Sherman ibid, S. 558 ff und 587 ff, G. Vernin in The Chemistry of Heterocyclic Compounds (A. Weissberger a. E.C. Taylor), Volume 34/1, S. 166 ff, John Wiley a. Sons, New York 1979 und C. Temple in The Chemistry of Heterocyclic Compounds, a. Weissberger a. E.C. Taylor, Volume 37, S. 30 ff und 62 ff, John Wiley a. Sons, New York 1981).

Die Reduktion der Verbindungen der Formel II zu Verbindungen der Formel III wird z.B. in Eisessig mit Wasserstoff/Raney-Nickel oder mit Natriumsulfid in Dioxan durchgeführt (siehe z.B. Yang-i Lin u. S.A. Lang, J. Heterocycl. Chem. 17, 1273 1980).

Die Reinigung der Farbstoffe kann durch Chromatographie über Kieselgel mit Toluol/Essigester-Gemischen als Laufmittel durchgeführt werden. Anschließend werden die Farbstoffe z.B. aus Toluol umkristallisiert. Die Reinheitskontrolle erfolgt durch Dünnschichtchromatographie und Elementaranalyse.

Repräsentative Herstellungsmethoden sind in den folgenden Beispielen 1 und 2 beschrieben. Die Angaben über Teile und Prozente beziehen sich, sofern nicht anders vermerkt, auf das Gewicht.

Von besonderer Bedeutung sind Verbindungen der Formel Ia

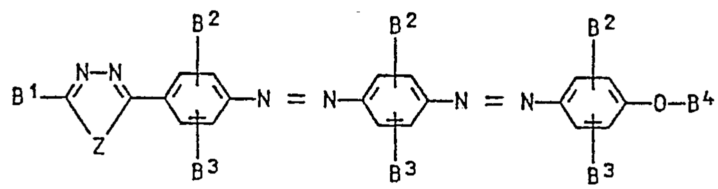 Ia

in der Z Sauerstoff oder Schwefel,

$B^1$ gegebenenfalls substituiertes Alkyl, Cycloalkyl oder Aryl oder gegebenenfalls substituiertes Alkyl- oder Cycloalkylmercapto,

$B^2$ und $B^3$ unabhängig voneinander Wasserstoff oder Methyl und $B^4$ $C_1$- bis $C_{12}$-Alkyl, Cyclohexyl, Benzyl, 4-($C_1$- bis $C_{12}$-Alkyl)-benzyl, 4-Cyclohexylbenzyl, 4-(4'-$C_1$- bis $C_7$-Alkylcyclohexyl)-benzyl sind.

Weiter von besonderer Bedeutung sind Verbindungen der Formel Ib

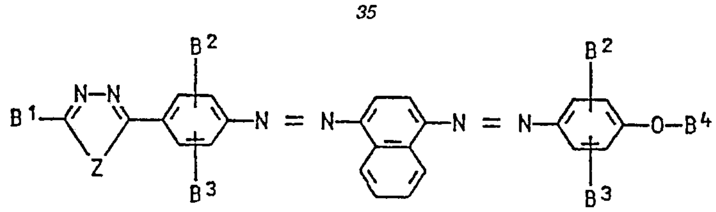 Ib

in der Z, $B^1$, $B^2$, $B^3$ und $B^4$ die für Formel Ia angegebene Bedeutung haben.

Weiterhin sind bevorzugt Verbindungen der Formel Ic

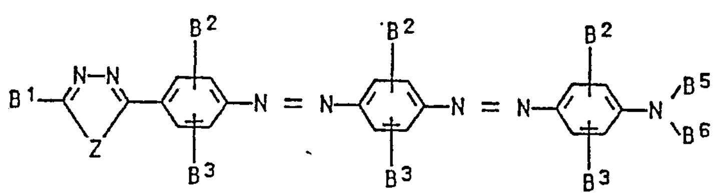 Ic

in der Z, $B^1$, $B^2$ und $B^3$ die für Formel Ia angegebene Bedeutung haben und

$B^5$ und $B^6$ unabhängig voneinander Wasserstoff, $C_1$- bis $C_8$-Alkyl, 2-Phenylethyl, Benzyl, 4-($C_1$- bis $C_{12}$-Alkyl)-benzyl, 4-Cyclohexylbenzyl, 4-(4'-$C_1$- bis $C_7$-Alkylcyclohexyl)-benzyl oder Cyclohexyl oder zusammen mit dem Stickstoff Pyrrolidino, Piperidino oder Morpholino sind.

Weiter von besonderer Bedeutung sind Verbindungen der Formel Id

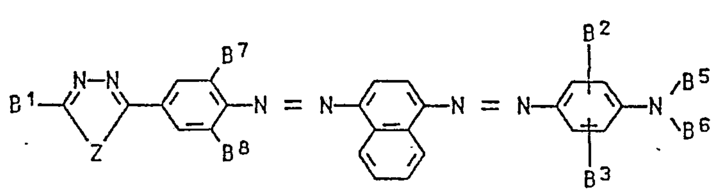 Id

in der $B^1$, $B^2$, $B^3$, $B^5$ und $B^6$ die für Formel Ic angegebene Bedeutung haben und

$B^7$ und $B^8$ unabhängig voneinander Wasserstoff, Brom, Chlor oder Cyan sind.

Von besonderer Bedeutung sind weiterhin Verbindungen der Formel Ie

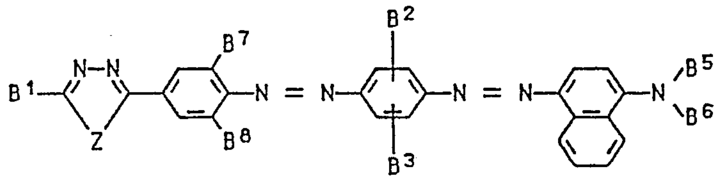

Ie

in der $B^1$, $B^2$, $B^3$, $B^5$, $B^6$ und $B^7$ und $B^8$ die für Formel Id angegebene Bedeutung haben.

In der EP-A-134 471 werden ähnliche Disazofarbstoffe beschrieben, die jedoch einen 1,2,3-Triazol-2-yl-Rest aufweisen. Bei der EP-A-134 471 handelt es sich um eine ältere Anmeldung gemäß Art. 54(3)EPÜ.

Allgemeine Herstellungsmethoden

Beispiel 1

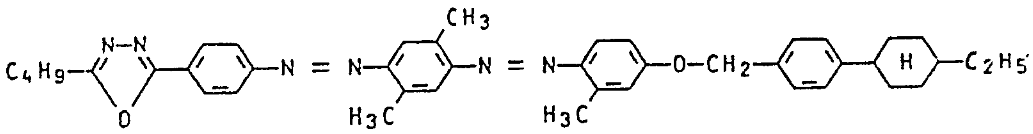

Zu einer Mischung aus 181 Teilen p-Nitrobenzoesäurehydrazid, 101 Teilen Triethylamin und 1000 Teilen N-Methylpyrrolidon werden unter Eiskühlung 121 Teile Valeriansäurechlorid gegeben. Danach rührt man die Lösung noch 4 h bei Raumtemperatur und gibt sie anschließend in 5000 Teile Wasser. Der entstandene Niederschlag wird abgesaugt, mit Wasser gewaschen und getrocknet. Man erhält 250 Teile (95% d. Th.) N-(p-Nitrobenzoyl)-N'-valeryl-hydrazin. Schmp.: 185–187 °C.

Ein Gemisch aus 80 Teilen N-(p-Nitrobenzoyl)-N'-valeryl-hydrazin, 5 Teilen p-Toluolsulfonsäure und 800 Teilen Xylol wird 4 h am Wasserabscheider zum Sieden erhitzt. Anschließend gibt man die Lösung in 2000 Teile einer gesättigten wässrigen Natriumhydrogencarbonat-Lösung, trennt die organische Phase ab und wäscht sie dreimal mit Wasser. Die Toluollösung wird mit Natriumsulfat getrocknet, dann abfiltriert und das Filtrat im Vakuum zur Trockne eingeengt. Man erhält 52 Teile (70% d. Th.) 2-Butyl-5-(p-nitrophenyl)-1,3,4-oxdiazol vom Schmp.: 68–70 °C.

Eine Mischung aus 24,7 Teilen 2-Butyl-5-(p-nitrophenyl)-1,3,4-oxdiazol, 2,5 Teilen einer wässrigen Raney-Nickel-Suspension und 250 Teilen Eisessig wird bei Raumtemperatur unter Schütteln hydriert. Nach beendeter Wasserstoffaufnahme gibt man 2,5 Teile Aktivkohle zu, filtriert die Mischung ab und gibt das Filtrat in eine gesättigte wäßrige Kochsalzlösung. Der entstandene Niederschlag wird abgesaugt, mit Wasser gewaschen und getrocknet. Man erhält 16 Teile (74% d. Th.) 2-Butyl-5-(p-aminophenyl)-1,3,4-oxdiazol vom Schmp.: 125 °C (Toluol).

Zu einem Gemisch aus 10,9 Teilen 2-Butyl-5-(p-aminophenyl)-1,3,4-oxdiazol, 70 Teilen Eisessig und 30 Teilen Propionsäure gibt man bei 5 °C 18 Teile Nitroschwefelsäure (34%ig) und rührt dann noch 3 h bei 5 °C nach. Anschließend wird die Diazoniumsalzlösung unter Eiskühlung zu einer Mischung aus 6,1 Teilen 2,5-Dimethylanilin in 100 Teilen Eisessig gegeben. Man läßt die Lösung auf Raumtemperatur kommen und fällt dann den entstandenen Farbstoff der Formel

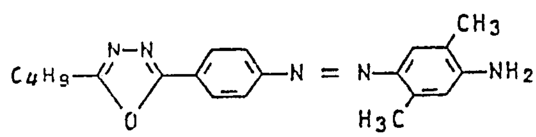

durch Zugabe von 600 Teilen Wasser aus. Der Niederschlag wird abgesaugt, mit Wasser und dann mit einer konz. wäßrigen Natriumacetat-Lösung und anschließend nochmals mit Wasser gewaschen. Das gut trockengesaugte Nutschgut wird in 140 Teilen Eisessig und 60 Teilen Propionsäure aufgenommen, dann werden zu dieser Lösung bei 5 °C zunächst 15 Teile einer 23%igen wäßrigen Natriumnitrit-Lösung und danach 20 Teile konz. Salzsäure gegeben und die Mischung 3 h bei 5 °C gerührt. Man filtriert die gebildete Diazoniumsalzlösung ab und gibt das Filtrat unter Eiskühlung zu einer Lösung von 5,4 Teilen m-Kresol in 100 Teilen Wasser und 2 Teilen Natronlauge. Durch Zugabe von 10%iger Natronlauge wird hierbei der pH-Wert der Lösung bei pH 7 gehalten. Die Mischung wird anschließend über Nacht bei Raumtemperatur gerührt, der entstandene Farbstoff abgesaugt, mit Wasser gewaschen und getrocknet. Man erhält 17,8 Teile (76% d. Th.) Bisazofarbstoff der Formel:

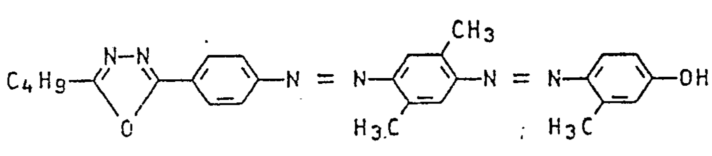

Schmp.: 244 °C.

Eine Mischung aus 4,7 Teilen des obigen Bisazofarbstoffs, 2,4 Teilen 4-(4'-Ethylcyclohexyl)-benzylchlorid, 1,4 Teilen Kaliumcarbonat und 40 Teilen Dimethylformamid wird 2 h bei 100 °C gerührt und anschließend in 200 Teile Wasser eingetragen. Der entstandene Niederschlag wird abgesaugt, mit Wasser gewaschen und getrocknet. Man erhält 5,9 Teile (84% d. Th.) Rohfarbstoff des Beispiels 1, der durch wiederholte Umkristallisation aus Toluol gereinigt wird. Schmp.: 160 °C, λmax ($CH_2Cl_2$): 405 nm.

Beispiel 2

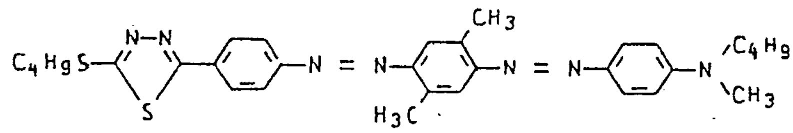

Zu einer Suspension von 91 Teilen Kaliumdithiocarbazat in 900 Teilen N-Methylpyrrolidon werden unter Eiskühlung 85,9 Teile n-Butylbromid gegeben und die Mischung anschließend 2 h bei Raumtemperatur gerührt. Dann gibt man 116,7 Teile p-Nitrobenzoylchlorid unter Eiskühlung zu, rührt weitere 2 h bei Raumtemperatur und gibt das Reaktionsgemisch in 3000 Teile Eiswasser. Das zunächst ölig anfallende Butyl-3-(p-nitrobenzoyl)-dithiocarbazat kristallisiert beim Stehen über Nacht, wird dann abgesaugt und mit Wasser gewaschen. Das gut trockengesaugte Nutschgut wird in 1000 Teile konz. Schwefelsäure eingetragen, die Mischung 1 h bei 50 °C gerührt und dann in 3000 Teile Eiswasser gegeben. Der Niederschlag wird abgeaugt, getrocknet und aus Eisessig umkristallisiert. Man erhält 130 Teile (70% d. Th.) reines 2-Butylthio-5-(p-nitrophenyl)-1,3,4-thiadiazol vom Schmp.: 140 °C.

Die Hydrierung zum 2-Butylthio-5-(p-aminophenyl)-1,3,4-thiadiazol wird nach dem im Beispiel 1 beschriebenen Verfahren durchgeführt. Ausbeute: 71% d. Th., Schmp.: 91 °C (Toluol).

13,3 Teile 2-Butylthio-5-(p-aminophenyl)-1,3,4-thiadiazol werden wie im Beispiel 1 erläutert mit 18 Teilen Nitrosylschwefelsäure (34%ig) in 70 Teilen Eisessig und 30 Teilen Propionsäure diazotiert und auf 6,1 Teile 2,5-Dimethylanilin 100 Teilen Eisessig gekuppelt. Man erhält den Monoazofarbstoff der Formel:

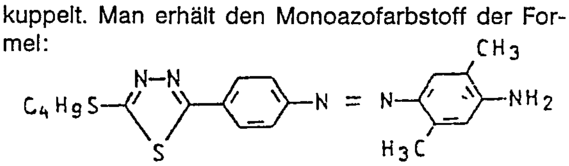

Dieser wird als gut trockengesaugtes Nutschgut in 140 Teilen Eisessig und 50 Teilen Propionsäure suspendiert, dann werden zu dieser Mischung bei 5 °C zunächst 15 Teile einer 23%igen wäßrigen Natriumnitritlösung und dann 20 Teile konz. Salzsäure gegeben und die Mischung 4 h bei 5 °C gerührt. Anschließend filtriert man die Diazonimumsalzlösung ab und gibt das Filtrat zu einer Mischung aus 8,2 Teilen N-Butyl-N-methylanilin, 150 Teilen iso-Butanol, 200 Teilen einer gesättigten wäßrigen Natriumacetatlösung und 100 Teilen Eis. Das Gemisch wird über Nacht gerührt, der entstandene Farbstoff abgesaugt, mit Wasser, mit Methanol und dann nochmals mit Wasser gewaschen und getrocknet. Man erhält 18 Teile (63% d. Th.) Rohfarbstoff des Beispiels 2, der durch Chromatographie über Kieselgel (Fa. Merck, Kieselgel 60, 0,063–0,0200 nm) mit einem Toluol/Essigester-Gemisch (40/l) als Eluationsmittel und anschließende Umkristallisation aus Toluol gereinigt wird.

Schmp.: 150 °C, λmax ($CH_2Cl_2$): 505 nm

| Bsp. | | Schmp. | λmax ($CH_2Cl_2$) |
|---|---|---|---|
| 3 | 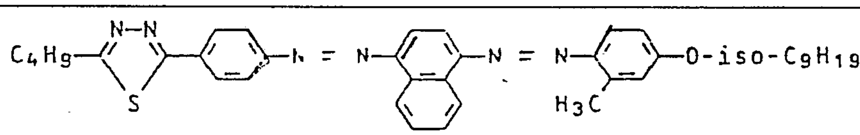 | 120 °C | 454 nm |
| 4 | 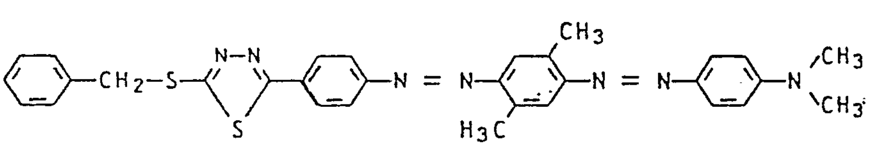 | 240 °C | 498 nm |
| 5 | 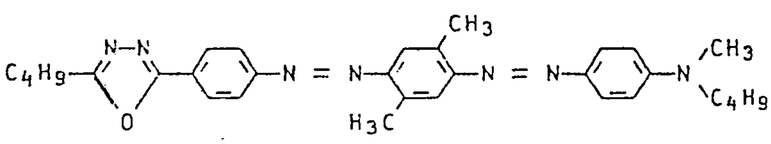 | 146 °C | 503 nm |

| Bsp. | | Schmp. | λmax ($CH_2Cl_2$) |
|---|---|---|---|
| 6 | 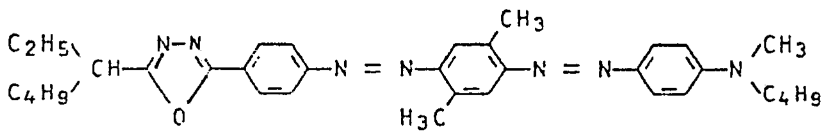 | 01 | 503 nm |
| 7 | 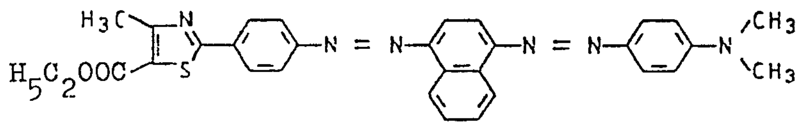 | 198 °C | 538 nm |
| 8 | 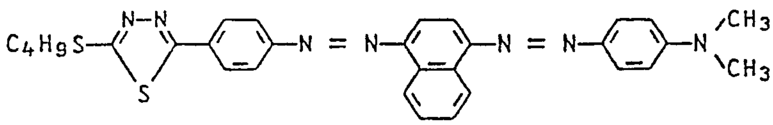 | 190 °C | 531 nm |
| 9 | 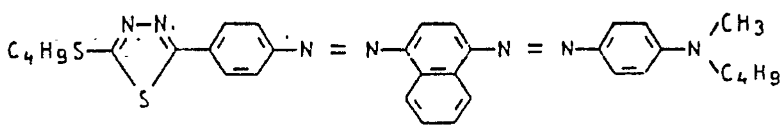 | 170 °C | 543 nm |
| 10 | 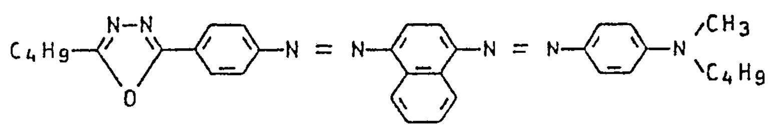 | 140 °C | 540 nm |
| 11 | 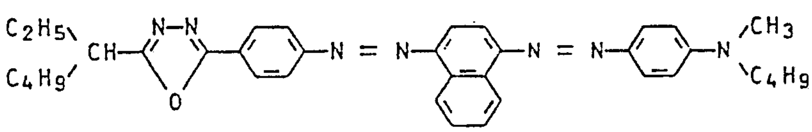 | 96 °C | 539 nm |
| 12 | 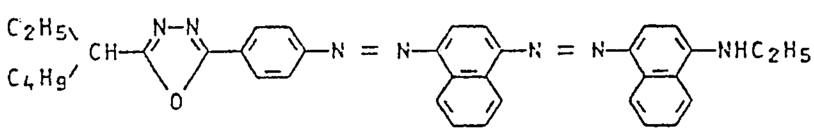 | 174 °C | 565 nm |
| 13 | 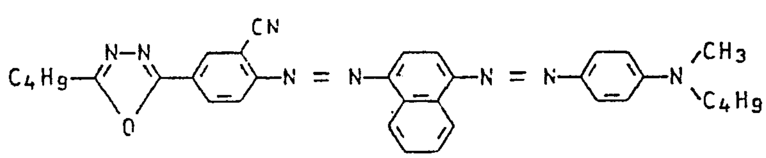 | 202 °C | 605 nm |
| 14 | 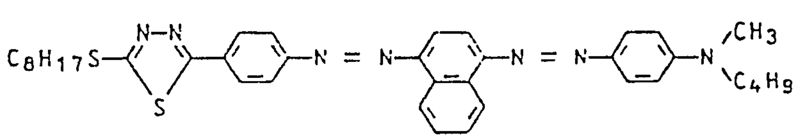 | 153 °C | 542 nm |
| 15 | 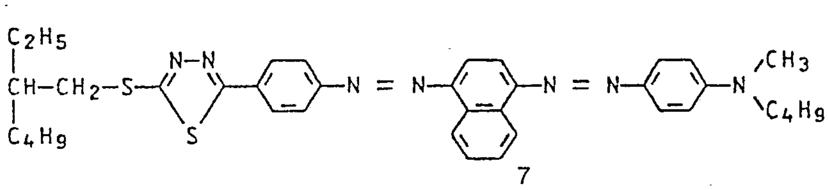 | 114 °C | 543 nm |

| Bsp. | | Schmp. | λmax ($CH_2Cl_2$) |
|---|---|---|---|
| 16 | 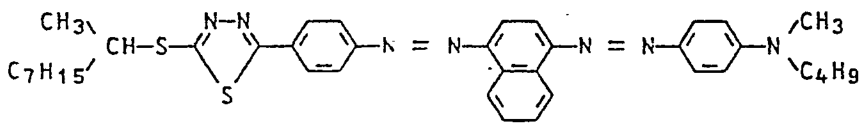 | 122 °C | 541 nm |
| 17 | 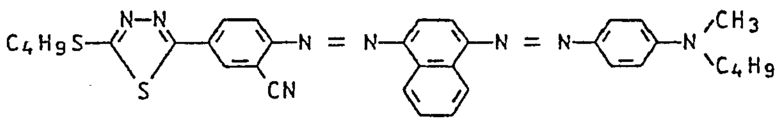 | 169 °C | 583 nm |
| 18 | 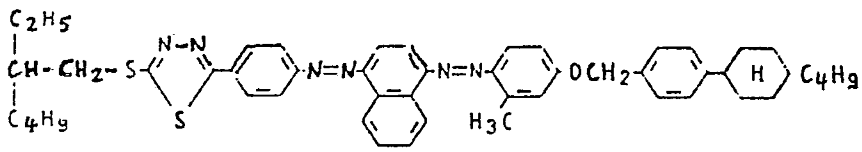 | 144 °C | 453 nm |
| 19 | 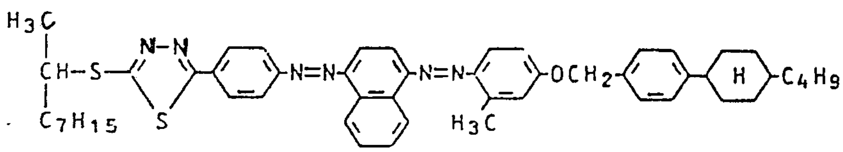 | 150 °C | 452 nm |

Tabelle 1

| Beispiel | Ordnungsgrad S (bei RT) | Löslichkeit L (bei RT) | Flüssigkristallmischung |
|---|---|---|---|
| 1 | 0,76 | 1,6% | ZLI 1957/5 |
| | 0,76 | 1,3% | ZLI 1957/5 |
| 2 | 0,74 | 1,1% | ZLI 1957/5 |
| 4 | 0,78 | < 0,2% | ZLI 1840 |
| 5 | 0,73 | 1,4% | ZLI 1840 |
| | 0,73 | 1,3% | ZLI 1957/5 |
| 6 | 0,68 | > 5% | ZLI 1957/5 |
| 7 | 0,74 | 1,4% | ZLI 1840 |
| 8 | 0,76 | 1,3% | ZLI 1840 |
| | 0,78 | 0,5% | ZLI 1957/5 |
| 9 | 0,79 | 0,6% | ZLI 1840 |
| | 0,77 | 0,3% | ZLI 1957/5 |
| 10 | 0,74 | 1,2% | ZLI 1957/5 |
| 11 | 0,74 | > 5% | ZLI 1957/5 |
| 12 | 0,71 | 0,8% | ZLI 1957/5 |

Tabelle 2

| Beispiel | Ordnungsgrad S (bei RT) | Löslichkeit L (bei RT) | Flüssigkristallmischung |
|---|---|---|---|
| 14 | 0,77 | 0,7% | ZLI 1957/5 |
| 15 | 0,8 | > 5% | ZLI 2452 |
| 16 | 0,81 | > 5% | ZLI 2452 |
| 17 | 0,75 | – | ZLI 1957/5 |
| 18 | 0,82 | 3,1% | ZLI 2452 |
| 19 | 0,77 | > 5% | ZLI 1957/5 |
| | 0,84 | > 5% | ZLI 2452 |

In Tabelle 1 sind für die Beispiele 1, 2 und 4–12 der bei Raumtemperatur gemessene Ordnungsgrad S, die ebenfalls bei Raumtemperatur bestimmte Löslichkeit L und die verwendeten Flüssigkristallmischungen der Fa. Merck zusammengefaßt.

Die ebenfalls bei Raumtemperatur gemessenen Werte für den Ordnungsgrad S und die Löslichkeit L der Beispiele 14–19 gemessen in ZLI 1957/5 oder ZLI 2452 finden sich in Tabelle 2.

Der Ordnungsgrad S wurde nach der bekannten Gleichung

$$S = \frac{CR-1}{CR+2}$$

in handelsüblichen Meßzellen mit homogener Randorientierung (Polyimid) bestimmt. Das dichroitische Verhältnis CR wurde durch Messung der Extinktionen E″ (Messung mit parallel zur Vorzugsrichtung der nematischen Phase polarisiertem Licht) und E⊥ (Messung mit senkrecht zur Vorzugsrichtung der nematischen Phase polarisiertem Licht) nach der Beziehung

$$CR = \frac{E''}{E^{\perp}}$$

ermittelt, wobei die Farbstoffkonzentration so gewählt wurde, daß E″ zwischen 1 und 2 lag. Die Messungen wurden an einem Spektralphotometer der Fa. Beckmann Acta CIII durchgeführt.

In Figur 1 sind die Extinktionen E″ und E⊥ für die Verbindung des Beispiels 9 in ZLI 1840 dargestellt.

Die Löslichkeit wurde wie folgt bestimmt.

50 mg des jeweiligen Farbstoffs wurde 1 Woche bei Raumtemperatur in 1 ml Flüssigkristall eingerührt, die gesättigte Lösung vom Rückstand abzentrifugiert und die Löslichkeit durch Extinktionsvergleich ermittelt.

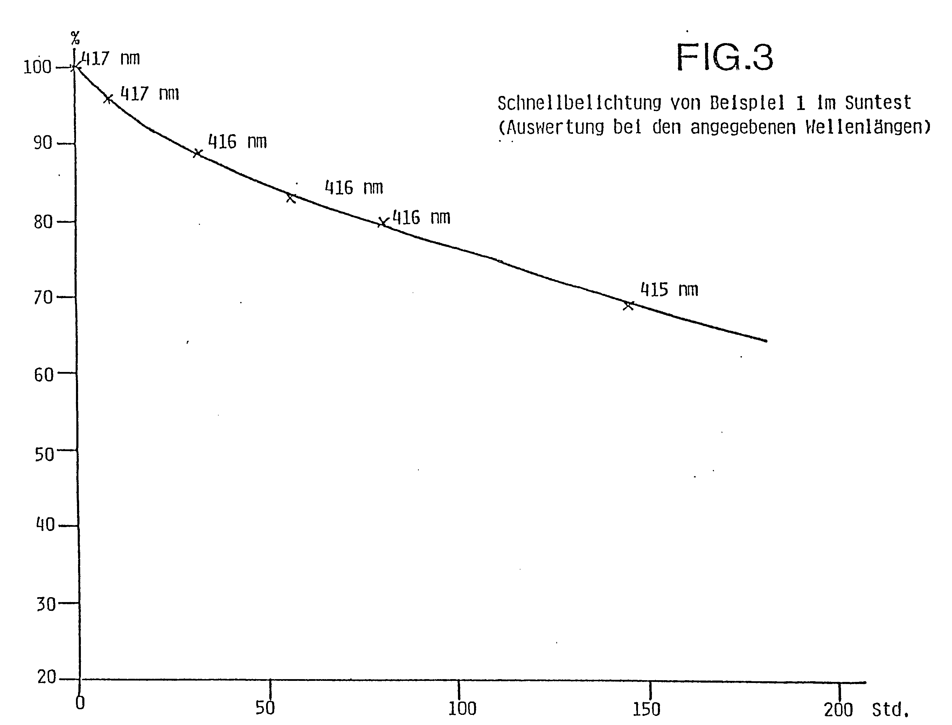

Die Bestimmung der Lichtstabilität der Farbstoffe im jeweiligen Flüssigkristall erfolgte durch Schnellbelichtung der Lösung in der Meßzelle im Suntest (Fa. Hanau) bei 25 °C. Die Farbstoffe zeigten, insbesondere bei Verwendung eines UV-Schutzlackes, eine gute Photostabilität. In den Figuren 2 und 3 ist die prozentuale Änderung von E″ gegen die Belichtung für die Beispiele 1 und 5 gemessen in ZLI 1840, dargestellt.

## Patentansprüche

1. 5-Ring-Heterocyclen enthaltende Azofarbstoffe der allgemeinen Formel I

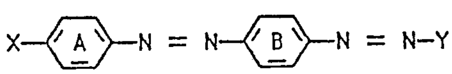 I

in der X einen Rest der Formel

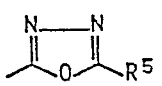, 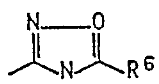, 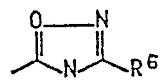, 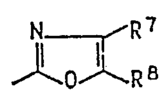, 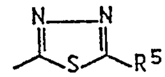, 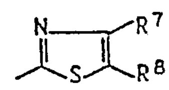,

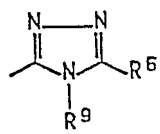 oder 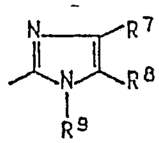,

bedeutet, wobei $R^5$ gegebenenfalls substituiertes Alkyl, Cycloalkyl oder Aryl, gegebenenfalls substituiertes Alkyl- oder Cycloalkyl-mercapto,

$R^6$ gegebenenfalls substituiertes Alkyl, Cycloalkyl oder Aryl,

$R^7$ gegebenenfalls substituiertes Alkyl, Cycloalkyl oder Phenyl oder Carbonester,

$R^8$ gegebenenfalls substituiertes Alkyl, Cycloalkyl oder Phenyl oder Carbonester,

$R^7$ und $R^8$ zusammen einen gegebenenfalls substituierten ankondensierten Benzring und

$R^9$ Wasserstoff, gegebenenfalls substituiertes Alkyl, Cycloalkyl oder Phenyl sind, und

Y ein Rest der Formel

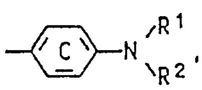, 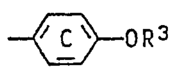, 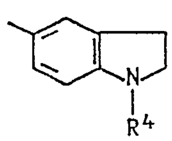, 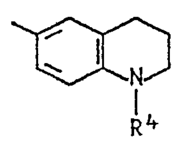, 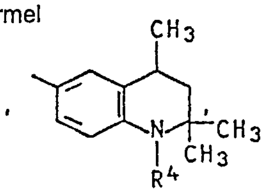

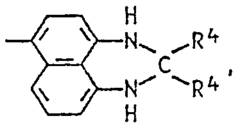, 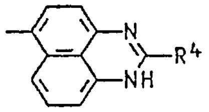, 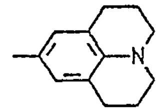 oder 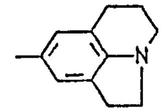

ist, wobei die Ringe A, B und C noch substituiert und durch einen Benzring anelliert sein können und wobei

$R^1$ und $R^2$ Wasserstoff oder gegebenenfalls substituiertes Alkyl, Aralkyl, Allyl oder Cycloalkyl oder zusammen mit dem Stickstoff Piperidino, Pyrrolidino oder Morpholino,

$R^3$ Wasserstoff oder gegebenenfalls substituiertes Alkyl, Cycloalkyl, Aralkyl, Acyl, Alkoxy- oder Aroxycarbonyl oder Arylsulfonyl und

$R^4$ Wasserstoff, Alkyl oder Cycloalkyl sind.

2. Verbindungen gemäß Anspruch 1 der Formel

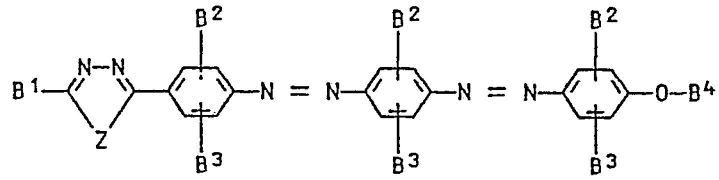

in der Z Sauerstoff oder Schwefel,

$B^1$ gegebenenfalls substituiertes Alkyl, Cycloalkyl oder Aryl oder gegebenenfalls substituiertes Alkyl- oder Cycloalkylmercapto,

$B^2$ und $B^3$ unabhängig voneinander Wasserstoff oder Methyl und

$B^4$ $C_1$- bis $C_{12}$-Alkyl, Cyclohexyl, Benzyl, 4-($C_1$- bis $C_{12}$-Alkyl)-benzyl, 4-Cyclohexylbenzyl, 4-(4'-$C_1$-bis $C_7$-Alkylcyclohexyl)-benzyl sind.

3. Verbindungen gemäß Anspruch 1 der Formel

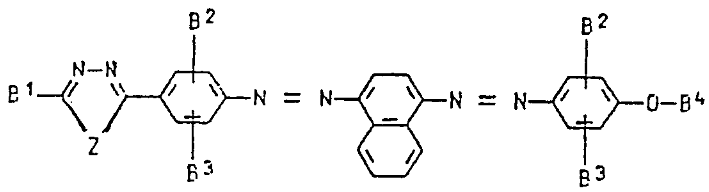

in der Z, $B^1$, $B^2$, $B^3$ und $B^4$ die für Anspruch 2 angegebene Bedeutung haben.

4. Verbindungen gemäß Anspruch 1 der Formel

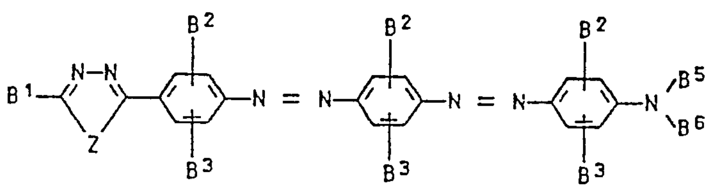

in der Z, $B^1$, $B^2$ und $B^3$ die für Anspruch 2 angegebene Bedeutung haben und $B^5$ und $B^6$ unabhängig voneinander Wasserstoff, $C_1$- bis $C_8$-Alkyl, 2-Phenylethyl, Benzyl, 4-($C_1$- bis $C_{12}$-Alkyl)-benzyl, 4-Cyclohexylbenzyl, 4-(4'-$C_1$- bis $C_7$-Alkylcyclohexyl)-benzyl oder Cyclohexyl oder zusammen mit dem Stickstoff Pyrrolidino, Piperidino oder Morpholino sind.

5. Verbindungen gemäß Anspruch 1 der Formel

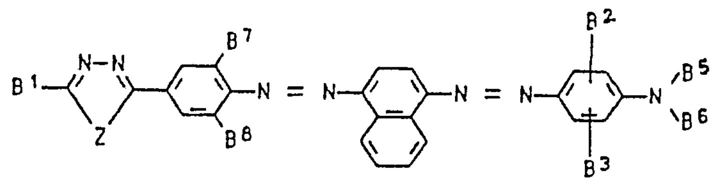

in der $B^1$, $B^2$, $B^3$, $B^5$ und $B^6$ die für Anspruch 4 angegebene Bedeutung haben und $B^7$ und $B^8$ unabhängig voneinander Wasserstoff, Brom, Chlor oder Cyan sind.

6. Verbindungen gemäß Anspruch 1 der Formel

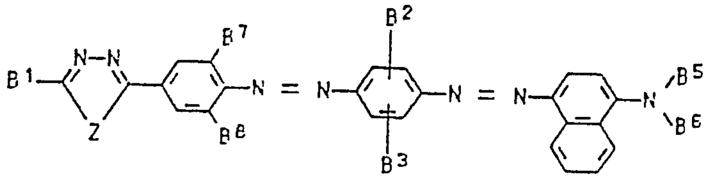

in der $B^1$, $B^2$, $B^3$, $B^5$, $B^6$, $B^7$ und $B^8$ die für Anspruch 5 angegebene Bedeutung haben.

7. Verwendung der Verbindungen gemäß Anspruch 1 als Farbstoffe in flüssigkristallinen Medien sowie zum Färben von synthetischen Polymeren.

## Claims

1. An azo dye which contains a 5-membered heterocyclic structure and is of the formula I

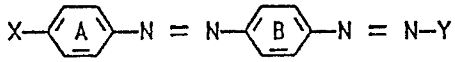 I

where X is a radical of the formula

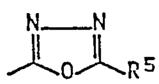, 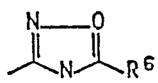, 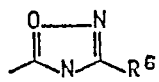, 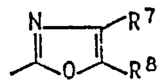, 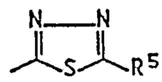, 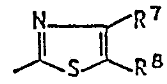,

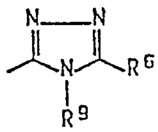 oder 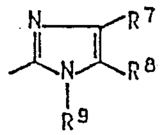,

where $R^5$ is unsubstituted or substituted alkyl, cycloalkyl or aryl or unsubstituted or substituted alkyl- or cycloalkylmercapto, $R^6$ is unsubstituted or substituted or substituted alkyl, cycloalkyl or aryl, $R^7$ and $R^8$ are each unsubstituted or substituted alkyl, cycloalkyl or phenyl or a carboxylic ester group, or $R^7$ and $R^8$ together form an unsubstituted or substituted fused-on benzene ring, and $R^9$ is hydrogen, unsubstituted or substituted alkyl, cycloalkyl or phenyl, and Y is a radical of the formula

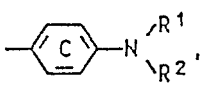, 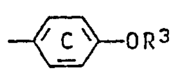, 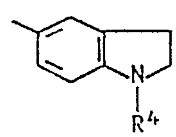, 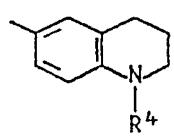, 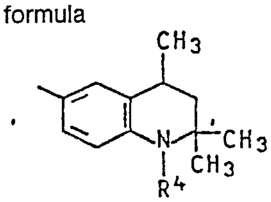

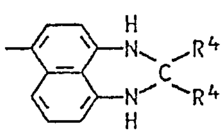, 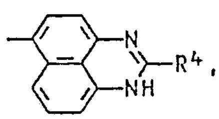, 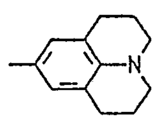 or 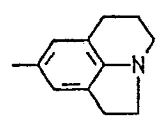

the rings A, B and C can be further substituted and can be fused to a benzene ring, $R^1$ and $R^2$ are each hydrogen or unsubstituted or substituted alkyl, aralkyl, allyl or cycloalkyl, or $R^1$ and $R^2$ together with the nitrogen are piperidino, pyrrolidino or morpholino, $R^3$ is hydrogen or unsubstituted or substituted alkyl, cycloalkyl, aralkyl, acyl, alkoxycarbonyl, aryloxycarbonyl or arylsulfonyl and $R^4$ is hydrogen, alkyl or cycloalkyl.

2. A compound as claimed in claim 1, of the formula where

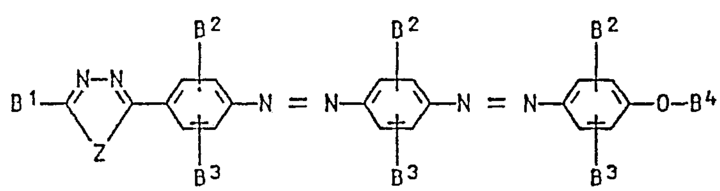

Z is oxygen or sulfur, $B^1$ is unsubstituted or substituted alkyl, cycloalkyl or aryl or unsubstituted or substituted alkyl- or cycloalkylmercapto, $B^2$ and $B^3$ independently of one another are each hydrogen or methyl, and $B^4$ is $C_1$–$C_{12}$alkyl, cyclohexyl, benzyl, 4-($C_1$–$C_{12}$-alkyl)-benzyl, 4-cyclohexylbenzyl or 4-(4'-$C_1$–$C_7$-alkylcyclohexyl)-benzyl.

3. A compound as claimed in claim 1, of the formula

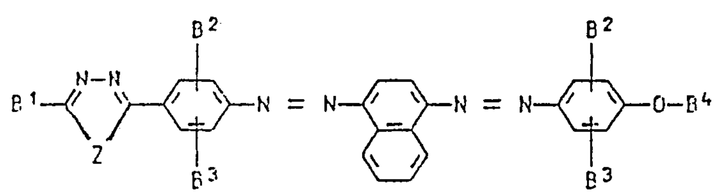

where Z, $B^1$, $B^2$, $B^3$ and $B^4$ have the meanings given for claim 2.

4. A compound as claimed in claim 1, of the formula

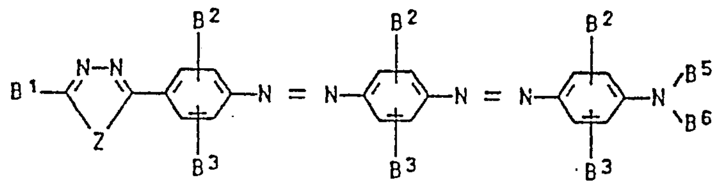

where Z, $B^1$, $B^2$ and $B^3$ have the meanings given for claim 2, and $B^5$ and $B^6$ independently of one another are each hydrogen, $C_1$–$C_8$-alkyl, 2-phenylethyl, benzyl, 4-($C_1$–$C_{12}$-alkyl)-benzyl, 4-cyclohexylbenzyl, 4-(4′-$C_1$–$C_7$-alkylcyclohexyl)-benzyl or cyclohexyl, or $B^5$ and $B^6$ together with the nitrogen are pyrrolidino, piperidino or morpholino.

5. A compound as claimed in claim 1, of the formula

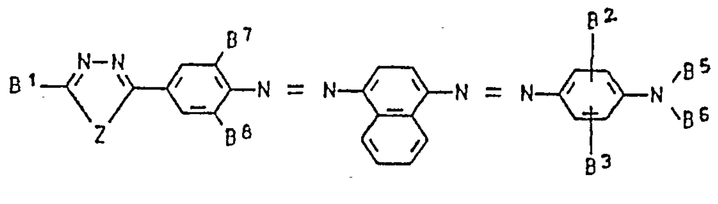

where $B^1$, $B^2$, $B^3$, $B^5$ and $B^6$ have the meanings given for claim 4, and $B^7$ and $B^8$ independently of one another are each hydrogen, bromine, chlorine or cyano.

6. A compound as claimed in claim 1, of the formula

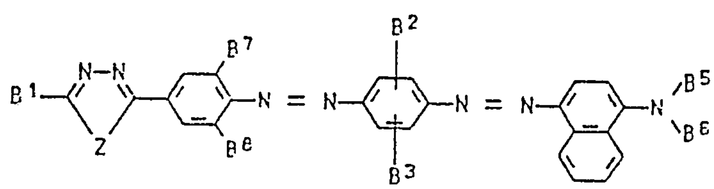

where $B^1$, $B^2$, $B^3$, $B^5$, $b^6$, $B^7$ and $B^8$ have the meanings given for claim 5.

7. Use of a compound as claimed in claim 1 as a dye in liquid-crystalline media and for dyeing synthetic polymers.

**Revendications**

1. Colorants azoïques contenant des hétérocycles à cinq chaînons de formule générale I

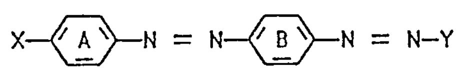

I

dans laquelle X représente un reste de formule

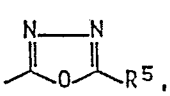 , 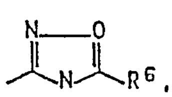 , 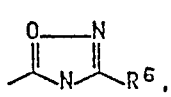 , 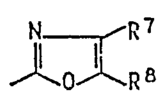 , 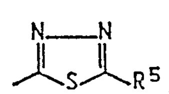 , 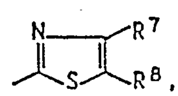 ,

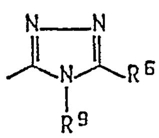 ou 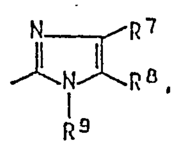 ,

où $R^5$ est un radical alkyle, cycloalkyle ou aryle éventuellement substitué ou alkyl- ou cycloalkylmercapto éventuellement substitué,

$R^6$ est un radical alkyle, cycloalkyle ou aryle éventuellement substitué

$R^7$ est un radical alkyle, cycloalkyle ou phényle éventuellement substitué ou ester carboxylique,

$R^8$ est un radical alkyle, cycloalkyle ou phényle éventuellement substitué ou ester carboxylique,

$R^7$ et $R^8$ forment ensemble un noyau benzénique condensé éventuellement substitué et

$R^9$ est un atome d'hydrogène ou un radical alkyle, cycloalkyle ou phényle éventuellement substitué, et

Y est un reste de formule

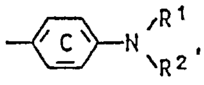, 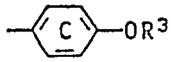, 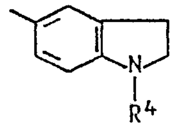, 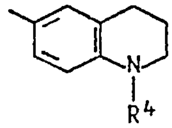, 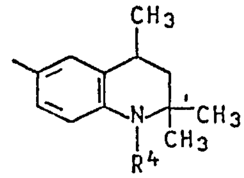

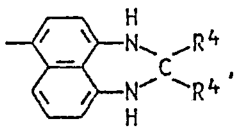, 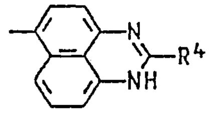, 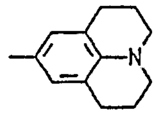 oder 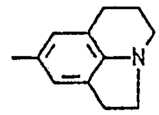

où les noyaux A, B et C peuvent en outre être substitués et condensés par un noyau benzénique et où

$R^1$ et $R^2$ sont des atomes d'hydrogène ou des restes alkyle, aralkyle, allyle ou cycloalkyle éventuellement substitués ou forment avec l'atome d'azote un reste pipéridino, pyrrolidino ou morpholino,

$R^3$ est un atome d'hydrogène ou un radical (éventuellement substitué) alkyle, cycloalkyle, aralkyle, acyle, alcoxy- ou aryloxycarbonyle ou arylsulfonyle, et

$R^4$ est un atome d'hydrogène ou un radical alkyle ou cycloalkyle.

2. Composés selon la revendication 1 de formule

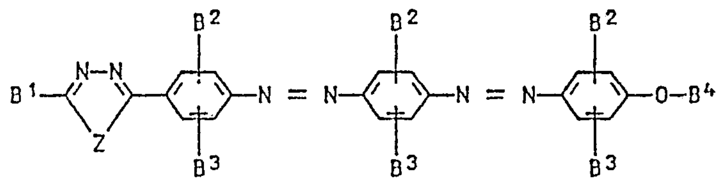

dans laquelle

Z est un atome d'oxygène ou de soufre,

$B^1$ est un groupement alkyle, cycloalkyle ou aryle éventuellement substitué ou alkyl- ou cycloalkylmercapto éventuellement substitué,

$B^2$ et $B^3$ sont, indépendamment l'un de l'autre, un atome d'hydrogène ou un groupement méthyle, et

$B^4$ est un groupement alkyle en $C_1$–$C_{12}$, cyclohexyle, benzyle, 4-(alkyl en $C_1$–$C_{12}$)benzyle, 4-cyclohexylbenzyle, 4-[4'-(alkyl en $C_1$–$C_7$)-cyclohexyl]benzyle.

3. Composés selon la revendication 1 de formule

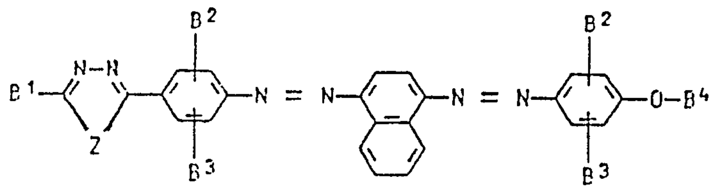

dans laquelle Z, $B^1$, $B^2$, $B^3$ et $B^4$ ont les significations données dans la revendication 2.

4. Composés selon la revendication 1 de formule

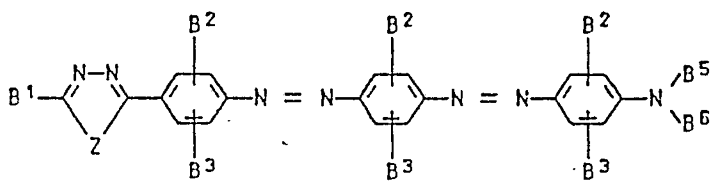

dans laquelle Z, $B^1$, $B^2$ et $B^3$ ont les significations données dans la revendication 2 et

$B^5$ et $B^6$, indépendamment l'un de l'autre, sont des atomes d'hydrogène ou des groupements alkyle en $C_1$–$C_8$, 2-phényléthyle, benzyle, 4-(alkyl en $C_1$–$C_{12}$)-benzyle, 4-cyclohexylbenzyle, 4-[4'-(alkyl en $C_1$–$C_7$)cyclohexyl]benzyle ou cyclohexyle, ou forment avec l'atome d'azote un groupement pyrrolidino, pipéridino ou morpholino.

5. Composés selon la revendication 1 de formule

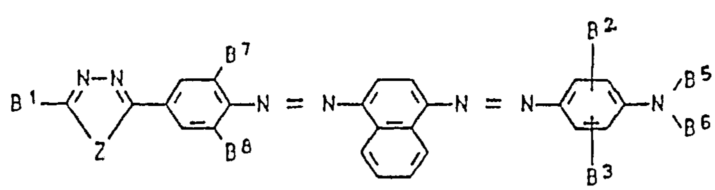

dans laquelle

$B_1$, $B_2$, $B_3$, $B^5$ et $B^6$ ont les significations données dans la revendication 4, et

$B^7$ et $B^8$ indépendamment l'un de l'autre sont des atomes d'hydrogène, de chlore ou de brome ou des radicaux cyano.

6. Composés selon la revendication 1 de formule

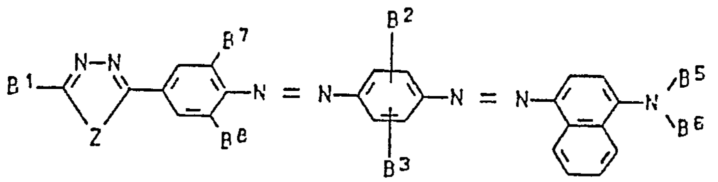

dans laquelle,

$B^1$, $B^2$, $B^3$, $B^5$, $B^6$, $B^7$ et $B^8$ ont les significations données dans la revendication 5.

7. Utilisation des composés selon la revendication 1, comme colorants dans les milieux à cristaux liquides ainsi que comme colorants pour les polymères synthétiques.

FIG.1

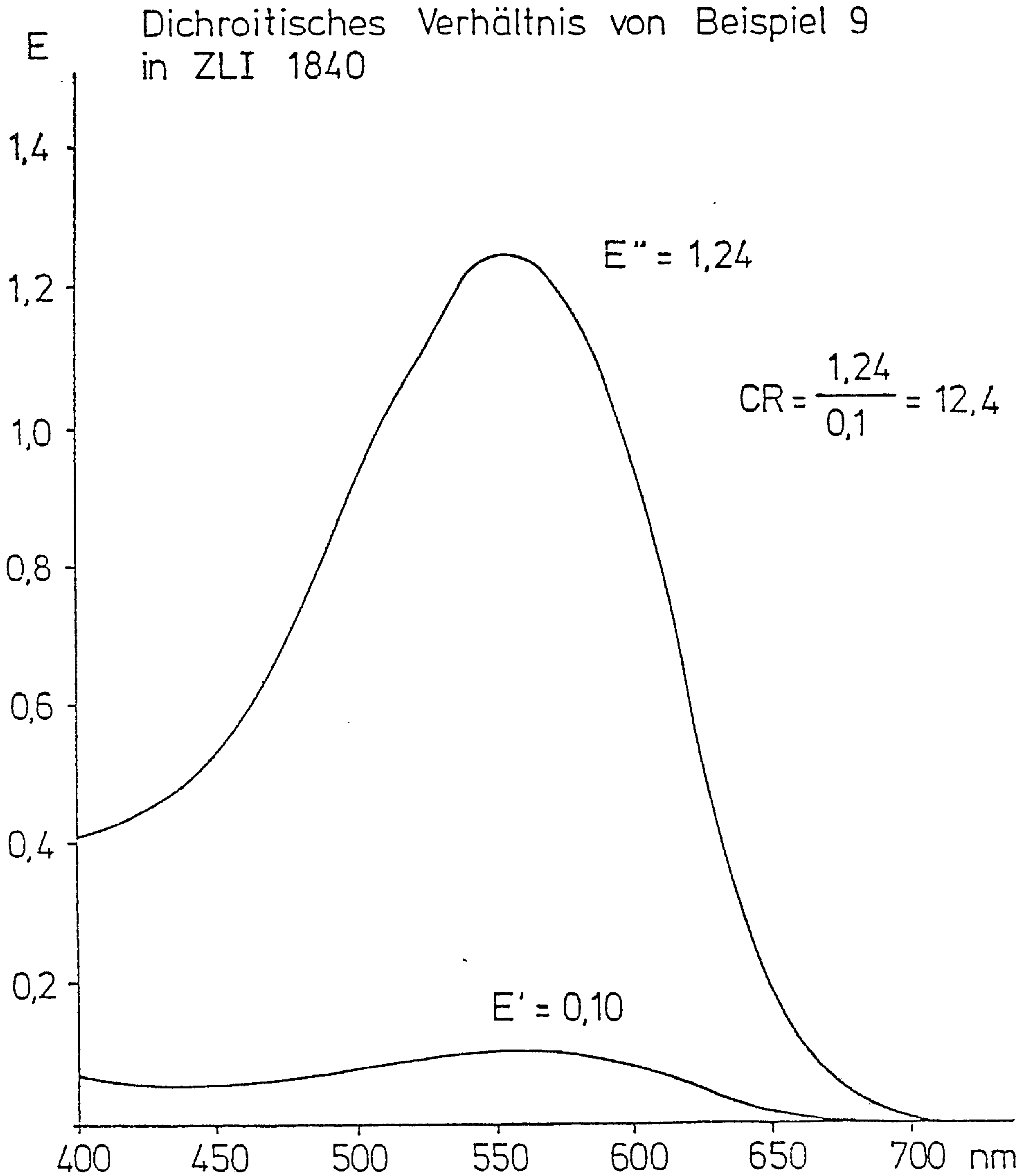
Dichroitisches Verhältnis von Beispiel 9
in ZLI 1840
E
1,4
1,2
1,0
0,8
0,6
0,4
0,2
E" = 1,24
CR = 1,24 / 0,1 = 12,4
E' = 0,10
400
450
500
550
600
650
700 nm

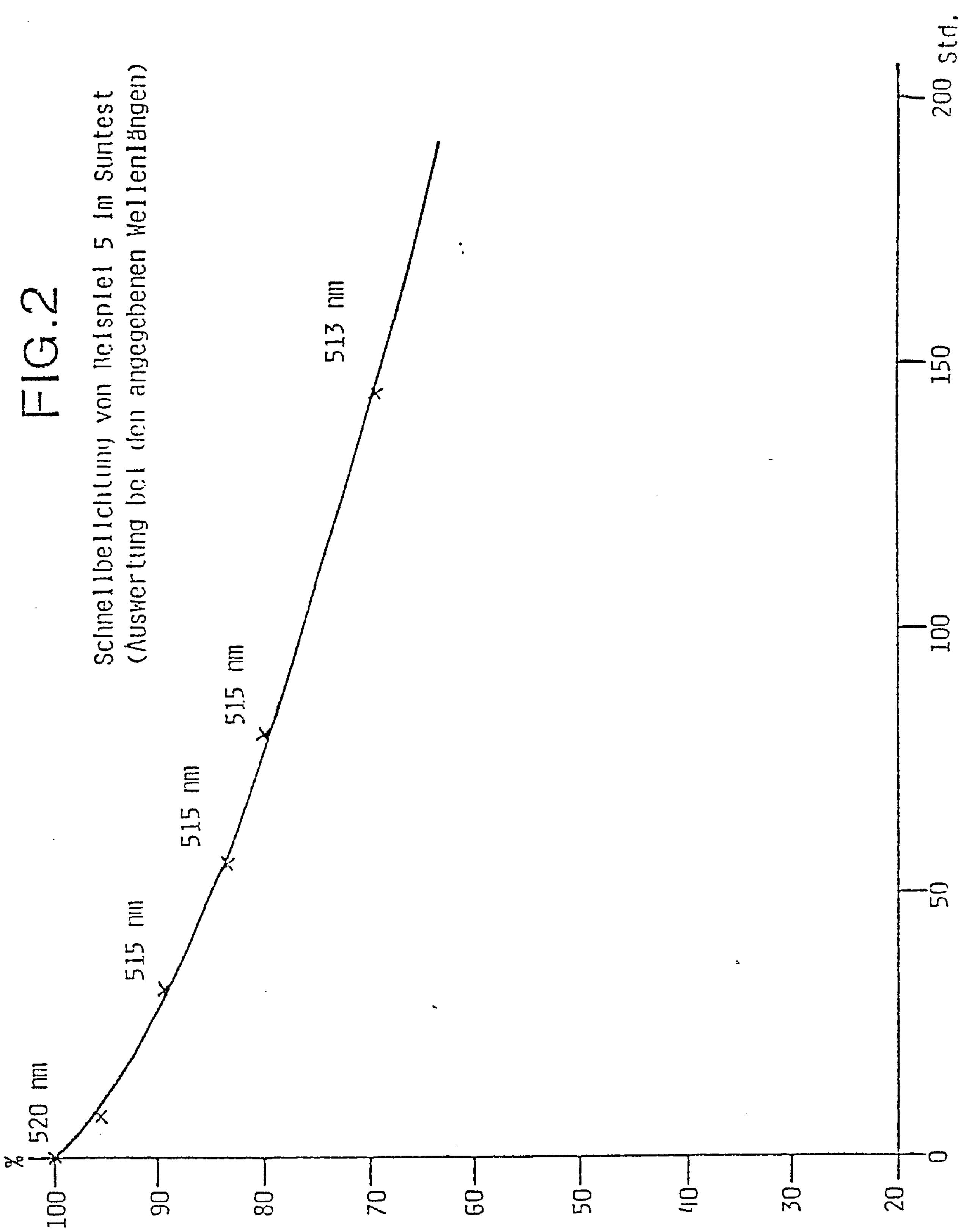
Schnellbelichtung von Beispiel 5 im Suntest
(Auswertung bei den angegebenen Wellenlängen)
520 nm
515 nm
515 nm
515 nm
513 nm
%
100
90
80
70
60
50
40
30
20
0
50
100
150
200 Std.

FIG.2

FIG.3

Schnellbelichtung von Beispiel 1 im Suntest
(Auswertung bei den angegebenen Wellenlängen)